**Europäisches Patentamt**

**European Patent Office**

**Office européen des brevets**

(19)

(11) Numéro de publication: **0 063 524**
**A1**

(12) # DEMANDE DE BREVET EUROPEEN

(21) Numéro de dépôt: **82400678.7**

(22) Date de dépôt: **15.04.82**

(51) Int. Cl.³: **C 02 F 1/14**

(30) Priorité: **16.04.81 FR 8107705**

(43) Date de publication de la demande:
**27.10.82 Bulletin 82/43**

(84) Etats contractants désignés:
**AT BE CH DE GB IT LI LU NL SE**

(71) Demandeur: **PATENTS AND RESEARCHES ESTABLISHMENT Société de droit du Liechtenstein dite:**

**Eschen(LI)**

(72) Inventeur: **Pedone, Antonio**
**13 Place Verte**
**Tournai(BE)**

(74) Mandataire: **Bonnetat, Christian**
**Cabinet PROPI Conseils 23 rue de Léningrad**
**F-75008 Paris(FR)**

(54) Distillateur solaire à gaz.

(57) Dispositif pour la distillation d'un liquide, comportant un récipient (3) contenant ledit liquide (19) et une paroi de condensation (12) disposée au-dessus dudit récipient (3).

Ce dispositif est caractérisé en ce qu'il comporte une enceinte (1) contenant un gaz et en ce que ladite enceinte (1) est délimitée en partie par le fond (2) dudit récipient (3) et en partie par au moins une feuille (5) de matière agissant en convertisseur photo-thermique.

Distillation d'eau de mer.

Fig.1

EP 0 063 524 A1

Distillateur solaire à gaz.                    0063524

La présente invention concerne un dispositif pour la distillation d'un liquide, c'est-à-dire permettant de faire passer ce liquide à l'état de vapeur, puis de condenser ladite vapeur pour la séparer du reste dudit liquide. Elle s'applique tout particulièrement, quoique non exclusivement, à la distillation de l'eau de mer, afin d'obtenir, d'un côté, de l'eau douce et, de l'autre, du sel.

On sait que, dans de nombreux pays, l'eau douce fait cruellement défaut. Pour s'en procurer, il est usuel de distiller de l'eau de mer. Cependant, le coût de l'eau douce ainsi obtenue est très élevé, car il est nécessaire de dépenser beaucoup d'énergie pour vaporiser l'eau de mer.

La présente invention a pour objet de remédier à cet inconvénient. Elle concerne un dispositif pour la distillation d'un liquide fonctionnant à partir de la seule énergie solaire. Ce dispositif selon l'invention est particulièrement intéressant du fait que les pays manquant d'eau douce sont souvent ceux qui subissent un fort ensoleillement.

Jusqu'à présent, à cause du faible rendement des installations solaires et du coût relativement élevé de celles-ci, il n'a guère été avantageux d'utiliser l'énergie solaire pour la distillation d'eau de mer. De plus, les générateurs solaires connus sont du type à circulation de liquide dans un serpentin ou analogue. Aussi, si l'on désire chauffer de l'eau de mer en vue de sa distillation, il est inévitable de mettre en contact lesdits générateurs solaires avec l'eau de mer, ce qui entraîne une corrosion rapide de ceux-ci. Il serait alors indispensable d'effectuer de nombreux travaux de nettoiement et d'entretien.

Comme il apparaîtra clairement de la suite, dans le dispositif conforme à l'invention, le générateur solaire n'est pas au contact de l'eau de mer et ce dispositif est robuste et ne nécessite pratiquement aucun entretien.

A cette fin, selon l'invention, le dispositif pour la distillation d'un liquide comportant un récipient ouvert contenant ledit liquide et une paroi de condensation disposée au-dessus dudit récipient, est remarquable en ce qu'il comporte une enceinte contenant un gaz et en ce que ladite enceinte est délimitée en partie par le fond dudit récipient et en partie par au moins une feuille de matière agissant en convertisseur photo-thermique.

Ainsi, ladite matière de conversion photo-thermique chauffe le gaz, par exemple de l'air, contenu dans l'enceinte et le gaz chauffé transfère sa chaleur au liquide à distiller, à travers ledit fond. Comme on le verra par la suite, le dispositif selon l'invention est particulièrement avantageux car les échanges thermiques entre le gaz et le liquide s'effectuent du bas vers le haut .La matière de conversion photo-thermique est avantageusement celle décrite dans la demande de brevet français N°80 24504 déposée le 19 novembre 1980 au nom de la Demanderesse.

De façon connue, ladite feuille est inclinée par rappprt à l'horizontale, afin d'être dirigée au mieux vers le soleil. Il est alors avantageux que le fond dudit récipient soit disposé à la partie supérieure de ladite enceinte et concave et que ladite feuille soit disposée en prolongement dudit fond. Ainsi, outre le fait qu'un fond concave augmente de façon favorable la surface du récipient en contact avec le gaz de l'enceinte, cette disposition permet une circulation naturelle du gaz chauffé à l'intérieur de l'enceinte. On remarquera de plus que la feuille de conversion photo-thermique agit comme un plan incliné contre la face inférieure duquel l'air chauffé exerce une pression qui favorise le prélèvement des calories et la mise en circulation de l'air chaud, circulation qui se poursuit par le guidage fourni par le fond concave du récipient. Cette circulation peut d'ailleurs être favorisée par un déflecteur disposé à l'intérieur de l'enceinte et délimitant, avec la feuille de matière de conversion photo-thermique et le fond dudit récipient un espace courbe ascendant parcouru par une lame d'air chaud et exerçant une certaine pression sur la face inférieure de la feuille de matière de conversion photo-thermique et sur le fond concave du récipient.

Eventuellement, on peut utiliser de plus un ventilateur pour forcer la circulation de l'air. De plus, on peut munir la face concave du fond d'un récipient d'un système d'ailettes pour favoriser les échanges thermiques entre le gaz chauffé de l'enceinte et le liquide contenu dans le récipient. Bien entendu, celui-ci est de préférence réalisé en une matière thermiquement bonne conductrice. Comme, de plus, il doit résister à l'action de l'eau de mer, il est avantageux de le construire en tôles d'alliages à base de cuivre ou d'aluminium, et éventuellement d'un acier inoxydable.

Il est avantageux que son fond, qui est concave vers l'enceinte pour favoriser la circulation du flux d'air chaud et l'échange des calories entre celui-ci et le liquide du récipient à travers ledit fond, soit convexe vers l'intérieur dudit récipient. Ainsi, le liquide concentré en sel apparaissant au cours de la distillation se rassemble sur les bords d'où il peut facilement être extrait. Dans un mode de réalisation avantageux, ledit récipient présente une forme sensiblement rectangulaire ou carrée et son fond est une portion de cylindre, d'axe parallèle à deux des côtés dudit récipient. De plus, on peut prévoir au voisinage des bords latéraux creux du récipient des rampes légèrement inclinées vers le milieu desdits bords.

Par suite, le liquide concentré en sel formé non seulement glisse du centre du fond vers les bords latéraux, mais encore de l'extrémité de ces bords latéraux vers le milieu de ceux-ci. Il est donc facile de l'évacuer en prévoyant une vanne d'évacuation à cet endroit. Cette vanne peut être automatique (par exemple commandée par la teneur en sel du liquide ou par la quantité d'eau distillée recueillie) ou bien manuelle. Afin de favoriser le rassemblement et l'évacuation du liquide concentré en sel, les bords du récipient où il se rassemble peuvent être arrondis.

La paroi de condensation prévue au-dessus du récipient peut être concave en regard de celui-ci.

Ainsi, les gouttelettes de distillat provenant de la condensation , sur ladite paroi, du liquide évaporé du récipient, s'écoulent le long de ladite paroi jusqu'à la périphérie, où elles sont recueillies dans une gouttière périphérique.

Afin de favoriser la distillation du liquide, on peut faire en sorte que la paroi de condensation, la gouttière périphérique et le récipient forment une enceinte étanche mise sous vide. Dans ce cas, le vidage de la gouttière est avantageusement effectué par des moyens commandés par un détecteur du niveau de liquide dans ladite gouttière.

De préférence, afin de récupérer au maximum les calories portées par la vapeur du liquide, ladite paroi de condensation forme le fond d'un récipient auxiliaire, contenant également du liquide à distiller. Ainsi, la chaleur de condensation de la vapeur peut servir à préchauffer le liquide en vue de sa distillation.

Dans un mode de réalisation avantageux, permettant une distillation statique, automatique et continue d'un liquide, le dispositif selon l'invention comporte une réserve dudit liquide disposée à un niveau supérieur à celui du récipient auxiliaire, lui-même disposé au-dessus du récipient lié à l'enceinte et on prévoit des moyens de communication, commandés en fonction du niveau de liquide dans lesdits récipients, d'une part, entre la réserve et le récipient auxiliaire, et, d'autre part, entre le récipient auxiliaire et le récipient lié à l'enceinte.

Ces moyens de communication peuvent comprendre des soupapes actionnées par flotteurs ou des électrovannes commandées par des électrodes.

De préférence, afin de pouvoir adapter facilement la production d'eau douce à différents paramètres spécifiques et donc adapter la taille d'une installation à ces paramètres, le dispositif selon l'invention se présente sous la forme de modules, comprenant chacun une enceinte modulaire et un récipient auxiliaire, également modulaire. Ainsi, par assemblage bout à bout desdites modules, il est possible d'obtenir toute dimension désirée pour ledit dispositif.

Les figures du dessin annexé feront bien comprendre comment l'invention peut être réalisée.

La figure 1 est une vue schématique en coupe transversale d'un dispositif selon l'invention, cette coupe correspondant à la ligne II de la figure 2.

La figure 2 est une vue de dessus schématique d'un dispositif selon l'invention, constitué de plusieurs modules assemblés, la réserve supérieure de liquide à distiller étant supprimée.

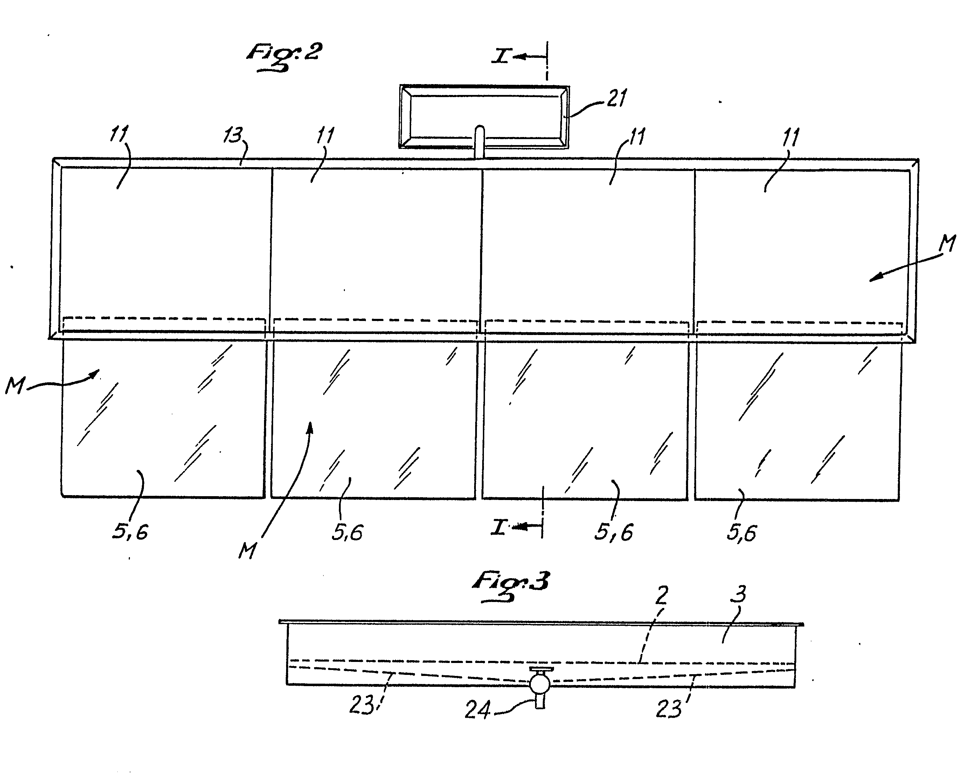

La figure 3 est une vue de face d'un récipient contenant le liquide à distiller.

La figure 4 illustre une variante de réalisation du dispositif selon l'invention.

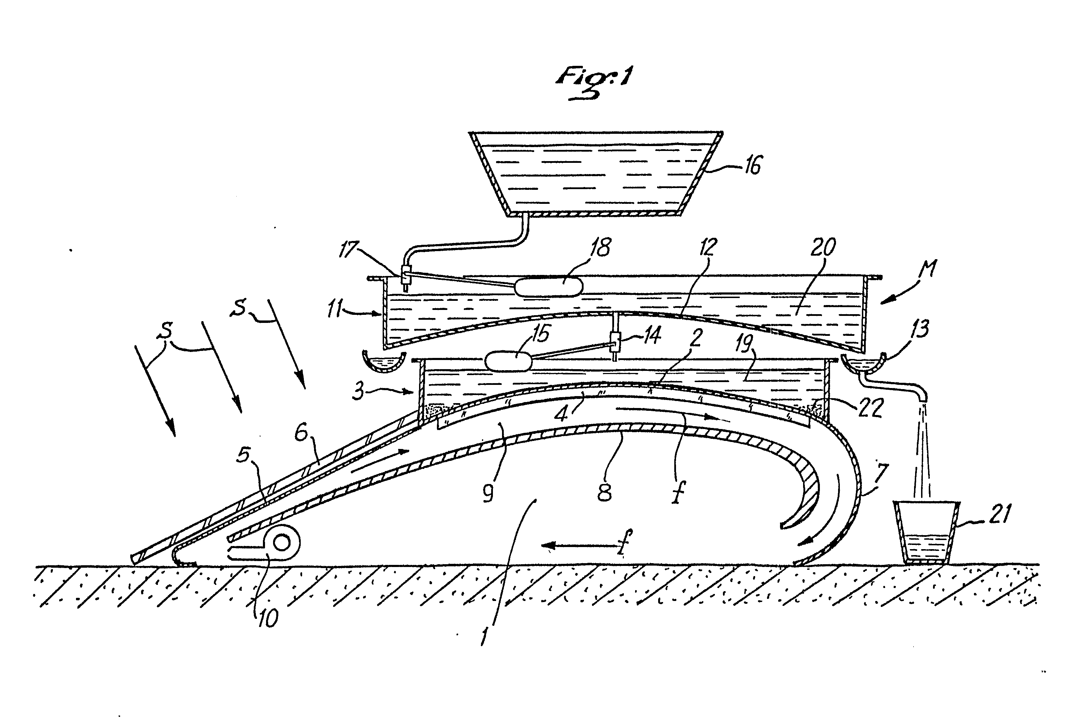

Le dispositif selon l'invention, montré schématiquement par la figure 1, comporte une enceinte 1 enfermant de l'air. La partie supérieure de l'enceinte 1 est formée par la face concave du fond 2 d'un récipient 3. Le récipient 3 est par exemple rectangulaire en vue de dessus et son fond 2 est une portion de cylindre d'axe parallèle aux deux côtés longitudinaux dudit récipient. La face concave du fond 2 peut porter un système d'ailettes 4.

Au moins d'un côté, le fond 2 est prolongé par une feuille 5 d'une matière susceptible de convertir en chaleur les photons reçus du soleil, par exemple celle décrite dans la demande de brevet mentionnée ci-dessus. Cette feuille 5 est inclinée par rapport à l'horizontale et prolonge la courbe du fond 2. Une vitre ou plaque transparente 6 est disposée au-dessus de la feuille 5, pour engendrer un effet de serre.

A l'opposé de la feuille 5, peut être disposée une autre feuille semblable, ou bien l'enceinte 1 peut être fermée par une paroi 7, par exemple concave du côté de l'intérieur de l'enceinte. A l'intérieur de celle-ci, est disposé un déflecteur 8, sensiblement parallèle à la feuille 6, au fond 2 et à la paroi 7 et écarté de ceux-ci, de façon à former un espace 9 en forme de lame courbe. Eventuellement, un ventilateur 10 est prévu dans l'enceinte 1.

Au-dessus du récipient 3 est prévu un récipient 11, dont le fond 12 est concave en regard du récipient 3. Les récipients 3 et 11 présentent des structures semblables, quoique le récipient 11 déborde du récipient 3, et sont relativement peu profonds. Une gouttière périphérique 13, ceinture la partie inférieure du récipient 11.

Par ailleurs, un robinet 14, commandé par un flotteur 15 se trouvant dans le récipient 3, est susceptible de mettre en communication les récipients 11 et 3.

A un niveau plus élevé que celui du récipient 11, est prévue une réserve 16 de liquide à distiller. La réserve 16 et le récipient 11 peuvent être mis en communication par l'intermédiaire d'un robinet 17, commandé par un flotteur 18 disposé dans le récipient 11.

A la mise en route du dispositif selon l'invention, on commence par emplir la réserve 7 de liquide à distiller, par exemple de l'eau de mer. Ce remplissage peut être effectué par tous moyens et notamment par un moteur thermique, accouplé à une pompe, dans le cas où une source électrique n'est pas disponible.

Les récipients 11 et 3 étant initialement vides, les robinets 17 et 15 sont ouverts, de sorte que le liquide à distiller passe par gravité de la réserve 16 au récipient 11, puis de celui-ci au récipient 3. Lorsque le récipient 3 est plein, le flotteur 15 ferme le robinet 14 et le récipient 11 peut se remplir jusqu'à ce que le flotteur 18 ferme le robinet 17.

Lorsque de l'énergie solaire, symbolisée par les flèches S, frappe la feuille de conversion photo-thermique 5 à travers la vitre 6, des calories sont transférées à l'air se trouvant dans la lame 9. Cet air se met en mouvement spontanément dans l'enceinte 1, en suivant un circuit symbolisé par les flèches f. Ce circuit prend naissance sous le plan incliné 5 et se poursuit sous le plafond concave 2 contre lesquels l'air exerce une pression favorable à la circulation et aux échanges thermiques. La convection naturelle ainsi obtenue peut être forcée, par l'intermédiaire du ventilateur 10.

En léchant, le fond thermoconducteur 2 et le système d'ailettes 4, l'air chauffé par la feuille 5, chauffe à son tour du bas vers le haut le liquide 19 du récipient 3 à travers ledit fond. Par suite, une partie du liquide 19 se vaporise et la vapeur ainsi engendrée rencontre le fond 12 sur lequel elle se condense. En se condensant, cette vapeur cède des calories au liquide 20 du récipient 11 et forme des gouttelettes qui s'écoulent par gravité et effet de surface le long de la face concave du fond 12, jusqu'à la gouttière périphérique 13. Le distillat ainsi recueilli, qui est de l'eau douce dans l'exemple de distillàtion d'eau de mer, peut être rassemblé dans un récipient 21, par l'intermédiaire de la gouttière 13.

Dès que la quantité de liquide 19 évaporé est suffisante, le robinet 14 est commandé à l'ouverture par le flotteur 15, et une quantité équivalente de liquide 20 préchauffé est transférée du récipient 11 au récipient 3.

De plus, par un processus analogue, le récipient 11 remplace la quantité de liquide transmise au récipient 3, par une quantité équivalente de liquide provenant de la réserve 16, à travers le robinet 17.

On voit donc que, grâce à l'invention, on obtient un dispositif de distillation automatique fonctionnant en continu, tant que du liquide se trouve dans la réserve 16. Dans ce dispositif, les échanges thermiques entre les gaz ou vapeurs et le liquide s'effectuent favorablement de bas vers le haut.

Le dispositif selon l'invention, montré en coupe schématique par la figure 1, peut constituer, au moins en ce qui concerne ses éléments 1 à 12, un module M. La figure 2 illustre schématiquement l'exemple d'une installation selon l'invention, obtenue par l'association de plusieurs modules M, disposés en ligne. Dans cet exemple, la gouttière 13 et le récipient 21 sont communs à tous les modules M.

Au fur et à mesure du fonctionnement du dispositif selon l'invention, du liquide 22 concentré en sel va s'accumuler dans les parties latérales profondes du récipient 3 (et éventuellement du récipient 11). Pour pouvoir l'éliminer facilement, selon l'invention, on prévoit dans ces parties latérales profondes des rampes 23 inclinées vers le milieu d'un récipient 3. Ainsi, le liquide concentré en sel s'accumule à ces endroits, où il suffit de prévoir un organe de prélèvement et d'élimination 24.

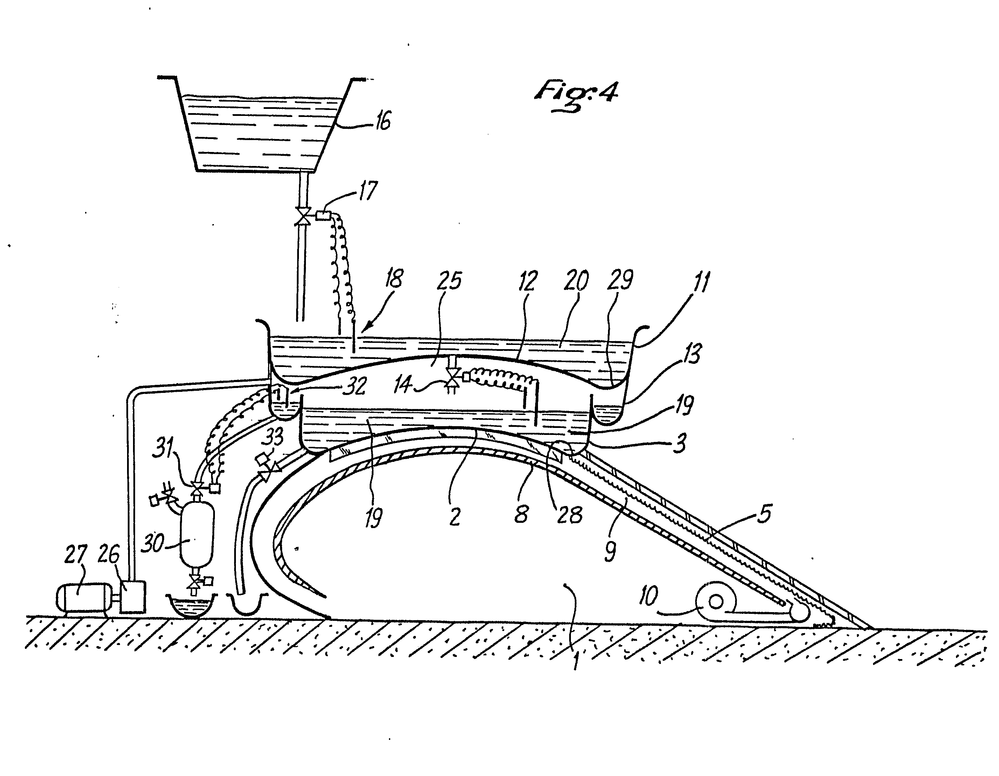

Dans la variante de réalisation montrée par la figure 4, on retrouve la plupart des éléments du dispositif de la figure 1. Cependant, dans ce cas, la paroi de condensation 12, la gouttière périphérique 13 et le récipient 3 forme une enceinte étanche 25, mise sous vide par l'intermédiaire d'un pompe à vide 26 entraînée par un moteur 27.

De plus, dans ce mode de réalisation, les bords latéraux 28 du récipient 3 et 29 du récipient 11 sont arrondis pour faciliter le recueillement et l'élimination du liquide chargé en sel. Les vannes 14 et 17 sont électriques et commandées par des électrodes 15 et 18, respectivement, détectant le niveau des liquides 19 et 20.

Par ailleurs, le vidage de la gouttière 13 s'effectue automatiquement par l'intermédiaire d'un sas 30, dont la communication avec ladite gouttière s'effectue par l'intermédiaire d'une électrovanne 31, commandée par des électrodes 32 détectant le niveau du liquide dans la gouttière 13.

Le vidage du liquide concentré en sel 22 et rassemblé sur les bords arrondis 28 du récipient 3 peut s'effectuer par l'intermédiaire d'une vanne 33. Cette vanne 33 peut être manuelle, actionnée périodiquement, ou bien encore être commandée automatiquement en fonction de la salinité du liquide 22 (par l'intermédiaire d'un densimètre) ou de la quantité d'eau douce obtenue. Ainsi, on peut éliminer le liquide 22 avant qu'une cristallisation de sel apparaisse.

Le liquide concentré 22 peut être conduit à des bacs de de cristallisation pour permettre la récupération du sel.

Pour récupérer la chaleur du liquide 22 passant la vanne 33, on peut prévoir un échangeur de chaleur en aval de la vanne 33, pour réchauffer le liquide des récipients 16 ou 11.

Bien entendu, quoique ci-dessus on ait surtout expliqué la présente invention appliquée à l'obtention d'eau douce, il va de soi que l'objet de l'invention n'est pas limitée à cette application et concerne non seulement l'obtention d'un condensat, mais également celle de résidus solides des distillations (sel de mer dans le présent exemple).

On remarquera de plus que le dispositif selon l'invention permet d'obtenir de l'eau chaude à de nombreuses fins, par exemple à usage sanitaire, ménager ou industriel. En effet, il est possible de prélever de la gouttière 13 ou du récipient 3 de l'eau chaude ou de dériver et de condenser séparément une partie de l'eau évaporée du récipient 3. Dans les applications d'une telle eau chaude, il sera bien entendu nécessaire de tenir compte des degrés de salinité différents entre l'eau salée provenant du récipient 3 et l'eau douce provenant de la gouttière 13.

11    0063524

REVENDICATIONS

1.Dispositif pour la distillation d'un liquide, comportant un récipient (3) contenant ledit liquide (19) et une paroi de condensation (12) disposée au-dessus dudit récipient (3),
caractérisé en ce qu'il comporte une enceinte (1) contenant un gaz et en ce que ladite enceinte (1) est délimitée en partie par le fond (2) dudit récipient (3) et en partie par au moins une feuille (5) de matière agissant en convertisseur photo-thermique.

2. Dispositif selon la revendication 1, dans lequel ladite feuille (5) est inclinée de façon variable par rapport à l'horizontale,de façon à être dirigée vers le soleil,
caractérisé en ce que le fond (2) dudit récipient (3) est disposé à la partie supérieure de l'enceinte (1) et concave vers celle-ci et en ce que la feuille (5) est disposée en prolongement dudit fond (2), de sorte que le gaz chauffé de l'enceinte s'élève en exerçant une pression contre ladite feuille (5) et ledit fond (2) ce qui favorise la mise en circulation du gaz et les échanges thermiques.

3.Dispositif selon la revendication 2,
caractérisé en ce qu'il comporte un déflecteur (8) disposé à l'intérieur de l'enceinte (1) et délimitant, avec la feuille (5) et le fond (2), un espace courbe ascendant (9), parcouru par une lame d'air chaud.

4. Dispositif selon l'une des revendications 1 à 3, dans lequel ladite paroi de condensation 12 est concave en regard du récipient 3,
caractérisé en ce qu'il comporte une gouttière périphérique (13)  pour recueillir le distillat.

5. Dispositif selon l'une des revendications 1 à 4, caractérisé en ce que ladite paroi de condensation 12 forme le fond d'un récipient auxiliaire 11 contenant également du liquide à distiller, de sorte que le liquide contenu dans le récipient auxiliaire 11 est préchauffé par la chaleur de condensation du liquide évaporé du récipient (3).

6. Dispositif selon la revendication 5, caractérisé en ce qu'il comporte des moyens de communication (14,15) commandés par le niveau du liquide (19) dans le récipient (3), entre ce récipient (3) et le récipient auxiliaire (11).

7. Dispositif selon l'une des revendications 5 ou 6 destiné à former un distillateur en continu, caractérisé en ce qu'il comporte une réserve (16) de liquide à distiller, disposée à un niveau supérieur à celui du récipient auxiliaire (11), et des moyens de communication (17,18), commandés par le niveau du liquide (20) dans le récipient auxiliaire (11), entre ce récipient auxiliaire (11) et la réserve (16).

8. Dispositif selon l'une quelconque des revendications 4 à 7, caractérisé en ce que la paroi de condensation (12) , la gouttière périphérique (13) et le récipient (3) forme une enceinte étanche (25) mise sous vide.

9. Dispositif selon la revendication 8, caractérisé en ce que le vidage de la gouttière (13) est effectué par des moyens (30,31), commandés par un détecteur (32) du niveau de liquide dans la gouttière (13).

10. Dispositif selon l'une quelconque des revendications 1 à 9, caractérisé en ce que le vidage du liquide résiduel du récipient est effectué avant apparition de dépôts ou de cristaux.

11. Dispositif selon l'une quelconque des revendications 1 à 10, caractérisé en ce que au moins la construction de l'enceinte (1), du récipient (3) et du récipient (11) est modulaire, de façon que de tels modules puissent être assemblés les uns au bout des autres.

12. Dispositif selon l'une des revendications 1 à 11, caractérisé en ce que chaque récipient (3 ou 11) présente une forme sensiblement rectangulaire, avec un fond constitué par une portion de cylindre, d'axe parallèle à deux côtés dudit récipient.

13.Dispositif selon l'une des revendications 1 à 12, caractérisé en ce que au moins le récipient (3) comporte des rampes pour diriger le liquide résiduel de la distillation vers des points précis du fond (12) dudit récipient (3).

14. Dispositif selon l'une des revendications 1 à 13, caractérisé en ce que au moins les bords du récipient (3) sont arrondis pour favoriser l'accumulation et l'élimination du liquide résiduel de distillation.

15. Dispositif selon l'une des revendications 1 à 14, caractérisé en ce que les échanges thermiques entre gaz ou vapeurs et liquide s'effectuent du bas vers le haut.

*Fig:1*

Fig.2

21

11   13   11   11   11

M

M   M

5,6   5,6   5,6   5,6

I   I

Fig.3

2   3

23   24   23

Fig. 4

**Office européen des brevets**

**RAPPORT DE RECHERCHE EUROPEENNE**

EP 82 40 0678.7

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernee | |
| A | FR - A - 1 560 687 (A. CHAMBOISSIER) <br> * fig. 1 * <br> -- | 1,4-6, 15 | C 02 F 1/14 |
| A | FR - A1 - 2 434 120 (CIE NATIONALE D'AME-NAGEMENT DE LA REGION DU BAS-RHONE ET DU LANGUEDOC) <br> * fig. 1 * <br> -- | 1 | |
| A | US - A - 2 848 389 (J. BJORKSTEN) <br> * fig. 1 à 3 * <br> -- | 4 | **DOMAINES TECHNIQUES RECHERCHES (Int. Cl. 3)** |
| A | US - A - 3 351 536 (R.M. FOX) <br> * fig. 1 * <br> -- | 1 | B 01 D 1/14 <br> C 02 F 1/14 |
| A | US - A - 3 775 257 (J. LOVRICH) <br> * fig. 1 * <br> -- | 1 | |
| A | US - A - 3 986 936 (M.A. RUSH) <br> * fig. 1 à 4 * <br> -- | 1 | |
| A | US - A - 4 235 679 (B.E. SWAIDAN) <br> * fig. 1 * <br> -- | 1 | **CATEGORIE DES DOCUMENTS CITES** |
| A | DE - C - 673 587 (E. ALTENKIRCH et al.) <br> * fig. 1 à 4 * <br> -- | 1 | X: particulièrement pertinent à lui seul <br> Y: particulièrement pertinent en combinaison avec un autre document de la même catégorie <br> A: arrière-plan technologique <br> O: divulgation non-ecrite <br> P: document intercalaire |
| A | DE - A1 - 2 922 348 (BROWN, BOVERI & CIE) <br> * fig. 1 à 3 * <br> ---- | 1 | T: théorie ou principe à la base de l'invention <br> E: document de brevet antérieur, mais publié à la date de dépôt ou après cette date <br> D: cité dans la demande <br> L: cité pour d'autres raisons |

&: membre de la même famille, document correspondant

X Le présent rapport de recherche a ete etabli pour toutes les revendications

| Lieu de la recherche | Date d'achevement de la recherche | Examinateur |
|---|---|---|
| Berlin | 04-06-1982 | KÜHN |

OEB Form 1503.1   06.78